# EUROPÄISCHE PATENTSCHRIFT

(11) **EP 2 705 104 B1**
(45) Veröffentlichungstag und Bekanntmachung des Hinweises auf die Patenterteilung: **04.07.2018**
(21) Anmeldenummer: 12718678.1
(22) Anmeldetag: 04.05.2012
(51) Int. Cl.: C09J 7/10, C09J 7/20, C09J 7/38

(54) **KLEBEBAND, BEVORZUGT SELBSTKLEBEBAND, BESTEHEND AUS MINDESTENS ZWEI DIREKT AUFEINANDER LAMINIERTEN SCHICHTEN A UND B, WOBEI MINDESTENS EINE ODER BEIDE SCHICHTEN A ODER B EINE KLEBMASSE IST**
ADHESIVE TAPE, PREFERABLY SELF-ADHESIVE TAPE, CONSISTING OF AT LEAST TWO LAYERS A AND B LAMINATED DIRECTLY ON ONE ANOTHER, WITH AT LEAST ONE OR BOTH LAYERS A OR B BEING AN ADHESIVE
BANDE ADHÉSIVE, DE PRÉFÉRENCE BANDE AUTOADHÉSIVE, CONSTITUÉE D'AU MOINS DEUX COUCHES A ET B STRATIFIÉES DIRECTEMENT L'UNE SUR L'AUTRE, AU MOINS L'UNE DES COUCHES A OU B OU LES DEUX ÉTANT UNE COMPOSITION ADHÉSIVE

(30) Priorität: 06.05.2011 DE 102011075470
(43) Veröffentlichungstag der Anmeldung: 12.03.2014
(73) Patentinhaber: tesa SE, 22848 Norderstedt (DE)
(72) Erfinder: KOOPS, Arne, 23881 Neu-Lankau (DE); NEUHAUS-STEINMETZ, Hermann, 22926 Ahrensburg (DE); SCHÜMANN, Uwe, 25421 Pinneberg (DE); SCHUBERT, Thomas, 22769 Hamburg (DE); KIRPICENOK, Olga, 20099 Hamburg (DE); WEILAND, Kirstin, 21035 Hamburg (DE); PERLBACH, Dennis, 21629 Neu Wulmstorf (DE); REICH, Sarah, 21259 Otter (DE)
(86) Internationale Anmeldenummer: PCT/EP2012/058284
(87) Internationale Veröffentlichungsnummer: WO 2012/152712

(56) Entgegenhaltungen:
- DE-A1-102006 057 800
- JP-A- 2009 086 452

## Beschreibung

Die Erfindung bezieht sich auf ein Klebeband, bevorzugt Selbstklebeband, bestehend aus mindestens zwei direkt aufeinander laminierten Schichten A und B, wobei mindestens eine oder beide Schichten A oder B eine Klebmasse ist.
Im Bereich der industriellen Fertigung besteht der Bedarf nach einfachen Vorbehandlungstechniken, um die Verklebungseigenschaften des Fügeteils zu verbessern.
- Typischerweise werden aufwändige Prozesse wie nasschemische Reinigung und Primerung der Fügeteiloberfläche verwendet, um hochfeste Verbindungen mit einem Selbstklebeband zu erzielen.
- Insbesondere die einfachen physikalischen Vorbehandlungstechniken unter Atmosphärendruck (Corona, Plasma, Flamme) werden heute zur Oberflächenbehandlung des Fügeteils zur Erzielung einer höheren Verankerungskraft mit einem Selbstklebeband vorteilhaft eingesetzt.
Sollen zwei oder mehr als zwei Schichten aufeinander laminiert werden, werden typischerweise eine oder beide Grenzflächen vor der Laminierung physikalisch vorbehandelt.
Es ist bekannt, dass die Behandlung mittels Corona und Plasma eine begrenzte Haltbarkeit in Bezug auf die Aktivierung der Grenzschicht hat, so dass zeitnah oder überwiegend direkt vor dem Prozess der Laminierung behandelt wird.

Plasma- und Corona-Vorbehandlungen werden zum Beispiel in der DE 2005 027 391 A1 und der DE 103 47 025 A1 vorbeschrieben oder erwähnt.

In der DE 10 2007 063 021 A1 wird beansprucht, dass sich die vorherige Plasma/Corona-Vorbehandlung positiv auf die Scherstandzeit und das Auffließverhalten der Verklebung auswirkt. Es ist nicht erkannt worden, dass das Verfahren eine Erhöhung der Klebkraft bewirken kann.
Die DE 10 2006 057 800 A1 beansprucht ein mehrlagiges Klebeband aus mindestens zwei direkt aufeinanderliegenden Haftklebmassen A und B, die jeweils vor Laminierung chemisch und/oder physikalisch vorbehandelt sind. Die dadurch erreichte verbesserte Verbundhaftung der Haftklebmasseschichten wird durch beidseitige Art der Vorbehandlung erzielt.

Im Hinblick auf Corona-Behandlungen unter Prozessgasatmosphäre wird in der DE 44 38 533 A1 ein Verfahren zur Corona-Behandlung beschrieben, das Prozessgas wie zum Beispiel Kohlendioxid oder Kohlenmonoxid einschließt sowie andere Gase, die dort als Inertgase bezeichnet werden wie zum Beispiel Stickstoff oder Argon.

Weiterer bekannter Stand der Technik ist über die DE 10 2007 011 235 A1 der Firma Plasmatreat GmbH, Steinhagen veröffentlicht, die eine verbesserte Vorbehandlung, insbesondere Reinigung einer Oberfläche eines Werkstückes beschreibt. Beispielsweise kann ein Verkleben mit einem anderen Werkstück erheblich verbessert werden.
Zudem wird in der EP 0 740 681 B1 die Behandlung der Oberfläche eines Polymers oder Polymermatrix-Verbundmaterials mittels Plasma-/Corona und einem Kopplungsmittel und das Aufbringen eines Klebstoffs oder eines selbstklebenden Bandes offenbart.

Auch die Plasma-Behandlung, insbesondere mit einem geeigneten Prozessgas, von wärmeaktivierbaren Klebharzschichten und Heissschmelzschichten für eine hohe Bindungsfestigkeit zu einer Haftklebeschicht sind bekannt.
Beispiele für letzteres finden sich in der EP 1 262 532 B1, die auf ein doppelfunktionales Klebeband abzielt, umfassend eine wärmeaktivierbare Klebharzschicht auf Basis Polyolefin und eine Haftklebeschicht auf Basis von Acrylat, wobei die Polyolefinschicht N₂-coronabehandelt ist, um auf diese Weise eine gute Verankerung zur Haftklebeschicht zu erzielen.

Der Stand der Technik zeichnet sich dadurch aus, dass sich die Vorbehandlungen überwiegend auf das Trägermaterial oder das Fügeteil beziehen, um eine höhere Verankerungskraft zum Klebstoff oder Selbstklebebandes aufzubauen.

In der JP 2009 086 452 A werden ein optischer Film und eine Klebemasse aufeinander laminiert. Auch hierbei sollen diese beiden Flächen vorbehandelt werden, und zwar mit physikalischen Methoden.
Dass die zur Behandlung der ersten Oberfläche verwendete Methode eine Coronabehandlung in Luft ist und dass die zur Behandlung der zweiten Oberfläche verwendete Methode eine Coronabehandlung in N₂ ist, wird in der JP 2009 086 452 A nicht offenbart.

Aufgabe der Erfindung ist es, weitere positive Effekte bei physikalischer Oberflächenmodifikation von Haftklebmassen und Trägermaterialien zu finden, um hochfeste Verbindungen zu erreichen. Kern der Aufgabe ist die Erzielung einer hohen Verankerung zwischen der haftklebrigen Schicht und Trägermaterials; als ein Nebenaspekt soll auch die Aufgabe erfüllt werden, wenn zwischen der physikalischen Behandlung und Laminierung ein längerer Zeitraum liegt.

Gelöst werden diese Aufgaben durch ein Klebeband, wie es gemäß Hauptanspruch dargestellt ist. Gegenstand der Unteransprüche sind dabei vorteilhafte Weiterbildungen des Erfindungsgegenstands.

Demgemäß betrifft die Erfindung ein Klebeband, bevorzugt Selbstklebeband, bestehend aus mindestens zwei direkt aufeinander laminierten Schichten A und B, wobei mindestens eine oder beide Schichten A oder B eine Klebmasse ist und die aufeinander laminierten Grenzflächen der Schichten A und B einer physikalischen Methode in Form einer CoronaEntladung unterzogen werden, bevor die Schichten aufeinanderlaminiert werden.

Eine physikalische Methode im Sinne dieser Erfindung ist eine Methode, welche durch elektrische Entladungen ein Plasma erzeugt und das zu behandelnde Substrat diesem Plasma ausgesetzt wird.

Im Sinne dieser Erfindung findet die Behandlung bei einem Druck statt, welcher nahe am oder bei Atmosphärendruck liegt. Die mittlere Elektronengeschwindigkeit im Plasma liegt meist sehr hoch, wobei ihre mittlere kinetische Energie deutlich höher als die der Ionen. Mithin ist eine über diese Energie definierte Elektronentemperatur verschieden von der Temperatur der Ionen, und das Plasma ist nicht im thermischen Gleichgewicht: es ist "kalt".

Die üblicherweise als "Corona" bezeichnete physikalische Vorbehandlungstechnik ist meist eine "dielektrische Barrierenentladung" (engl. dielectric barrier discharge, DBD), siehe dazu auch Wagner et al., Vacuum, 71 (2003), 417 bis 436. Dabei wird das zu behandelnde Substrat bahnförmig zwischen zwei Hochspannungselektroden durchgeführt, wobei mindestens eine Elektrode aus einem dielektrischen Material besteht oder damit beschichtet ist.

Die Behandlungsintensität einer Coronabehandlung wird als "Dosis" in [Wmin/m²] angegeben, mit der Dosis D=P/b*v, mit P=elektrischer Leistung [W], b=Elektrodenbreite [m], und v=Bahngeschwindigkeit [m/min].

Durch eine geeignet hohe Bahnspannung wird das Substrat auf die als Walze ausgeführte Gegenelektrode gepresst, um Lufteinschlüsse zu verhindern. Der Behandlungsabstand ist typischerweise ca. 1 bis 2 mm. Ein grundsätzlicher Nachteil einer solchen Zwei-Elektroden-Geometrie mit einer Behandlung im Raum zwischen Elektrode und Gegenelektrode ist die mögliche Rückseitenbehandlung. Bei kleinsten Luft- oder Gaseinschlüssen auf der Rückseite, beispielsweise wenn die Bahnspannung bei einer Rolle-zu-Rolle-Behandlung zu gering ist, findet eine meist ungewünschte Corona-Behandlung der Rückseite statt.

Bei der Behandlung mit der hochfrequenten Wechselspannung im kV-Bereich entstehen kurzzeitig diskrete Entladungskanäle zwischen Elektrode und Substrat, wobei auch beschleunigte Elektronen auf die Oberfläche des Substrats treffen. Beim Auftreffen der Elektronen kann die Energie das Zwei- bis Dreifache der Bindungsenergie der meisten molekularen Bindungen eines Kunststoffsubstrats betragen und damit diese aufbrechen. Durch Sekundärreaktionen entstehen funktionelle und polare Gruppen in der Oberfläche. Die Entstehung von polaren Gruppen trägt beispielsweise stark zur Steigerung der Oberflächenenergie bei. Durch die Wirkung der energiereichen beschleunigten Elektronen ist eine solche Behandlung sehr effizient bezogen auf die eingesetzte elektrische Energie, und sehr leistungsfähig bezogen auf die möglichen ausgelösten Reaktionen. Die Erzeugung einer hohen Dichte von polaren und funktionellen Gruppen steht dabei allerdings im Wettbewerb mit dem Abbau von Material durch Kettenbrüche und Oxidation.

Die einfache Coronabehandlung oder DBD wird üblicherweise zur Behandlung von unpolaren Oberflächen und Folien verwendet, damit deren Oberflächenenergie und Benetzbarkeit steigt. So werden Kunststofffolien vor dem Bedrucken oder dem Aufbringen von Klebemassen oft einer Coronabehandlung unterzogen.

Obwohl im weiteren Sinn eine Corona-Behandlung in Luft eine Technik ist, in der Plasma eine Rolle spielt, wird unter einer Plasmabehandlung bei Atmosphärendruck üblicherweise eine engere Definition verstanden.

Wenn eine Corona-Behandlung statt in Luft in einer anderen Gasmischung, zum Beispiel auf Stickstoffbasis, stattfindet, wird zwar teilweise schon von Plasma gesprochen. Eine Plasmabehandlung bei Atmosphärendruck im engeren Sinn ist jedoch eine homogene und entladungsfreie Behandlung. Beispielsweise kann durch Einsatz von Edelgasen, teils mit Beimischungen, ein solch homogenes Plasma erzeugt werden. Dabei findet die Behandlung in einem flächigen homogen mit Plasma gefüllten Reaktionsraum statt.

Das reaktive Plasma enthält Radikale und freie Elektronen, welche schnell mit vielen chemischen Gruppen in der Substratoberfläche reagieren können. Dies führt zur Entstehung von gasförmigen Reaktionsprodukten und hoch reaktiven, freien Radikalen in der Oberfläche. Diese freien Radikale können durch Sekundärreaktionen mit Sauerstoff oder anderen Gasen rasch weiterreagieren und bilden verschiedene chemische Funktionsgruppen auf der Substratoberfläche. Wie bei allen Plasmatechniken steht die Erzeugung von funktionellen Gruppen im Wettbewerb mit dem Materialabbau.

Das zu behandelnde Substrat kann statt dem Reaktionsraum einer Zwei-Elektroden-Geometrie auch nur dem entladungsfreien Plasma ausgesetzt werden ("indirektes" Plasma). Das Plasma ist dann meist auch in guter Näherung potentialfrei. Das Plasma wird dabei meist durch einen Gasstrom von der Entladungszone fortgetrieben und nach kurzer Strecke auf das Substrat geleitet, ohne dass eine Gegenelektrode benötigt wird. Die Lebenszeit (und damit auch die nutzbare Strecke) des reaktiven Plasmas, oft "afterglow" genannt, wird durch die genauen Details der Rekombinationsreaktionen und der Plasmachemie bestimmt. Meist wird ein exponentielles Abklingen der Reaktivität mit dem Abstand von der Entladungsquelle beobachtet.

Moderne indirekte Plasmatechniken basieren oft auf einem Düsenprinzip. Hierbei kann die Düse rund oder linienförmig ausgeführt sein, teilweise wird mit Rotationsdüsen gearbeitet, ohne hier eine Einschränkung vornehmen zu wollen. Ein solches Düsenprinzip ist vorteilhaft aufgrund seiner Flexibilität und seiner inhärent einseitigen Behandlung. Solche Düsen, beispielsweise der Firma Plasmatreat, sind industriell weit verbreitet zur Vorbehandlung von Untergründen vor einer Verklebung. Nachteilig sind die indirekte und weniger effiziente da entladungsfreie Behandlung, und dadurch die reduzierten Bahngeschwindigkeiten. Die übliche Bauform einer Runddüse ist jedoch besonders gut geeignet schmale Warenbahnen zu behandeln, wie beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Eine Plasma-Behandlung kann in verschiedenen Atmosphären stattfinden, wobei die Atmosphäre auch Luft umfassen kann. Die Behandlungsatmosphäre kann eine Mischung verschiedener Gase sein, ausgewählt unter anderem aus N₂, O₂, H₂, CO₂, Ar, He, Ammoniak, wobei zudem Wasserdampf oder andere Bestandteile beigemischt sein können. Durch diese beispielhafte Auflistung wird keine Einschränkung vorgenommen.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die oben beschriebenen Methoden auch als chemisch-physikalische Behandlungsmethoden beschreiben.

Gemäß einer bevorzugten Ausführungsform der Erfindung besitzen die aufeinander laminierten Grenzflächen eine durch die verschiedenartigen physikalischen Behandlungen der Grenzflächen erzeugte oder verstärkte Säure-Base- oder Donor-Akzeptor-Wechselwirkung, insbesondere durch Verwendung von komplementären Prozessgasen, insbesondere durch Verwendung eines oxidierenden und eines reduzierenden Gases, insbesondere durch Verwendung eines sauer-modifizierenden Gases und eines basisch-modifizierenden Gases.

Erfindungsgemäß ist die erste physikalische Behandlung eine Coronabehandlung in Luft und die zweite physikalische Behandlung eine Coronabehandlung in N2, wobei bevorzugt in der N2-Atmosphäre der O2-Gehalt <1000 ppm beträgt, besonders bevorzugt <100 ppm, insbesondere bevorzugt <20 ppm, ganz besonders bevorzugt <10 ppm.

Die erfindungsgemäß festgestellten Ergebnisse (siehe insbesondere Beispiel 4) können verstanden werden auf der Basis von Säure-Base-Wechselwirkungen. Die Luft-Corona erzeugt vorwiegend Sauerstoff-haltige Gruppen (beispielsweise Carbonsäuren) auf der Oberfläche des Schaums, die besonders vorteilhaft mit Stickstoff-haltigen Gruppen (beispielsweise primären und sekundären Aminogruppen) wechselwirken können, welche durch die Stickstoff-Corona auf der Oberfläche der Klebmasse eingebracht wurden. Der Begriff "Wechselwirkungen" soll hierbei alle üblichen graduellen Ausprägungen solcher Interaktionen einschließen, bis hin zu einer Bindung mit kovalenten Charakter. Insbesondere heben sich solche spezifischen Donor-Akzeptor-Wechselwirkungen von einer reinen unspezifischen Dipol-Dipol-Wechselwirkung ab.

Grundsätzlich ist die Modifikation der Säure-Base-Wechselwirkungen einer Oberfläche mittels physikalischer Methoden zur Verbesserung der Einmischbarkeit von Füllstoffen bekannt, siehe zum Beispiel DE 690 21 774 T2. In dieser Erfindung wird sich von der Notwendigkeit der Anpassung einer Oberfläche an eine vorgegebene Bedingung (bestimmte Reaktionschemie, umgebende Matrix, etc) gelöst, und ein Verfahren bereit gestellt, mit dem beide Oberflächen zueinander komplementär gestaltet werden können.

Die Azidität bzw. Basizität einer Oberfläche kann durch den Oberflächen-pKₛ-Wert (beziehungsweise pK_{b}) ausgedrückt werden. Dieser Wert ist eng verwandt mit dem lokalen pH und der Flächenladungsdichte an der Oberfläche. Eine alternative Beschreibung kann auch im Sinne des Lewis-Donor-Akzeptor-Konzepts erfolgen. Auch die Bildung von Wasserstoff-Brücken beruht auf einer Donor-Akzeptor-Wechselwirkung.

Die Azidität bzw. Basizität einer Oberfläche kann beispielsweise mit der Methode der Kontaktwinkeltitration gemessen werden (siehe zum Beispiel Bain et al., Langmuir, Vol. 5, No.6, 1989). Andere Methoden könnten die Bestimmung der Oberflächenenergie mit ihren sauren und basischen Komponenten nach van Oss sein, oder die Abschätzung der Flächendichte der funktionellen Gruppen mittels Derivatisierung und/oder kolorimetrischer Bestimmung. Grundsätzlich muss man beachten, dass bei gemischtfunktionellen Oberflächen mehrere pKₛ-Werte gemessen werden können, und die Azidität bzw. Basizität eine mittlere Eigenschaft der Oberfläche ist. Grundsätzlich sind die Begriffe sauer und basisch unscharf definiert, es kann jedoch immer zwischen zwei gegebenen funktionellen Gruppen bestimmt werden welche im Vergleich saurer oder basischer ist.

Wenn mit einer geeigneten physikalischen Oberflächenbehandlung die Differenz der Oberflächen-pKₛ-Werte vergrößert wird, und/oder die Flächendichte von komplementären Donor- und Akzeptorfunktionalitäten erhöht wird, dann leistet dies einen positiven Beitrag zur Verankerungsfestigkeit. Im Sinne einer gezielten Erhöhung von Donor-Akzeptor-Wechselwirkungen kann man von "komplementären physikalischen Behandlungen" mit "komplementären Prozessgasen" sprechen.

Wenn in eine Oberfläche mittels einer physikalischen Behandlung und einer geeigneten Behandlungsatmosphäre funktionelle Gruppen in die Oberfläche eingebaut werden, die üblicherweise als sauer charakterisiert werden, wird im Rahmen dieser Erfindung von sauer-modifizierenden Gasen gesprochen. Meist sind dies Gase, welche ein oder mehrere Sauerstoffatome in die Oberfläche einbringen. Im technischen Umgang werden solche Gase meist als oxidierend bezeichnet.

Die komplementären funktionellen Gruppen sind dann solche, die üblicherweise als basisch charakterisiert werden. Bei Behandlungsatmosphären, durch die solche basische funktionelle Gruppen in die Oberfläche eingebaut werden, wird im Rahmen dieser Erfindung von basisch-modifizierenden Gasen gesprochen. Meist sind dies Gase, welche ein oder mehrere Stickstoffatome in die Oberfläche einbringen. Dies ist oft für Gase der Fall, welche technisch als reduzierend bezeichnet werden.

Diese Definitionen finden sich auch in der US 7,147,758 B2 wieder, in der die Modifikation einer Oberfläche mittels ausgewählten oxidierenden und reduzierenden Gasen beschrieben wird.

Ohne eine Einschränkung vornehmen zu wollen können sauer-modifizierende Gase sein: O2, O3, CO2, CO, H2O, aber auch SO2, oder auch gasförmige Carbonsäuren, Ketone oder Aldehyde, oder Mischungen hieraus.

Ohne eine Einschränkung vornehmen zu wollen können basisch-modifizierende Gase sein: N2, H2, NH3, oder Mischungen hieraus.

Diese Gase können auch als Beimischung in einem Trägergas vorliegen, beispielsweise einem Inertgas wie einem Edelgas, oder einem Gas mit einer deutlich niedrigeren Reaktivität.

Grundsätzlich muss die Behandlung geeignet sein, komplementäre Donor-Akzeptor-Wechselwirkungen herzstellen oder zu verstärken. In Einzelfällen können auch Behandlungen der Oberflächen mit beiden Atmosphären gewählt aus einer einzigen Gruppe wie den sauer-modifizierenden Gasen, oder eine Atmosphären mit einer Mischung aus sauer- und basisch-modfizierenden Gasen

Grundsätzlich gilt dieses Konzept für Donor-Akzeptor-Wechselwirkungen über eine Säure-Base-Wechselwirkung hinaus.

Die Behandlungen könnten auch grundsätzlich mit einer anderen physikalischen Methode wie einer Plasmabehandlung durchgeführt werden.

Wie im Beispiel 4b gezeigt, kann dieses Konzept Anwendung finden bei der Behandlung von PE-basierten Trägerschäumen für Haftklebemassen, welche häufig an der Oberfläche mit adhäsionsmindernden Prozesshilfsmitteln wie Stearaten verunreinigt sind. Hier ist eine aggressiv oxidierende Sauerstoff-basierte Behandlung besonders effizient. Dann könnte entsprechend unserer Erfindung eine komplementäre Stickstoff-basierte physikalische Behandlung der hinzu zu kaschierenden Haftklebemasse gewählt werden. Überraschenderweise kann diese Stickstoff-basierte Modifizierung der Klebmasseoberfläche auch bei stark säurehaltigen Klebmassen einen positiven Effekt zeigen.

Gemäß einer bevorzugten Ausführungsform der Erfindung ist mindestens eine der Schichten A oder B viskoelastisch.
Eine viskoelastische Polymerschicht kann als sehr hochviskose Flüssigkeit angesehen werden, die unter Druckbelastung das Verhalten des Fließens (auch als "Kriechen" bezeichnet) zeigt. Solche viskoelastischen Polymere beziehungsweise eine solche Polymerschicht besitzen in besonderem Maße die Fähigkeit, bei langsamer Krafteinwirkung die auf sie einwirkenden Kräfte zu relaxieren: sie sind in der Lage, die Kräfte in Schwingungen und/oder Verformungen (die insbesondere auch - zumindest zum Teil - reversibel sein können) zu dissipieren, somit die einwirkenden Kräfte "abzupuffern", und eine mechanische Zerstörung durch die einwirkenden Kräfte bevorzugt zu vermeiden, vorteilhaft aber mindestens zu verringern oder aber den Zeitpunkt des Eintretens der Zerstörung zumindest hinauszögern. Im Falle einer sehr schnell einwirkenden Kraft zeigen viskoelastische Polymere üblicherweise ein elastisches Verhalten, also das Verhalten einer vollständig reversiblen Verformung, wobei Kräfte, die über das Elastizitätsvermögen der Polymere hinausgehen, zu einem Bruch führen können. Im Gegensatz hierzu stehen elastische Materialien, die auch bei langsamer Krafteinwirkung das beschriebene elastische Verhalten zeigen. Durch Beimischungen, Füllstoffe, Schäumung oder ähnliches können solche viskoelastischen Klebmassen in ihren Eigenschaften noch stark variiert werden.

Aufgrund der elastischen Anteile der viskoelastischen Polymerschicht, die wiederum wesentlich zu den klebtechnischen Eigenschaften von Klebebändern mit solch einer viskoelastischen Trägerschicht beitragen, kann die Spannung zum Beispiel einer Zug- oder Scherbeanspruchung nicht komplett relaxieren. Dies wir durch das Relaxationsvermögen ausgedrückt, welches definiert ist als ((Spannung(t=0) - Spannung (t)/ Spannung (t=0))*100%. Typischerweise zeigen viskoelastische Trägerschichten ein Relaxationsvermögen von mehr als 50 % auf.

Weiter vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Vorzugsweise basiert die Haftklebemassenschicht auf Naturkautschuk, Synthesekautschuk oder Polyurethanen, wobei vorzugsweise die Haftklebemassenschicht aus reinem Acrylat oder mehrheitlich aus Acrylat besteht.

Die Haftklebemasse kann zur Verbesserung der Klebeeigenschaften mit Klebrigmachern abgemischt sein.
Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Typische Einsatzmengen sind 10 bis 100 Gewichtsteile bezogen auf Polymere der Klebemasse.

Zur weiteren Verbesserung der Kabelverträglichkeit kann die Klebmasseformulierung optional mit Lichtschutz- oder primären und/oder sekundären Alterungsschutzmitteln abgemischt sein.
Als Alterungsschutzmittel können Produkte auf Basis sterisch gehinderter Phenole, Phosphite, Thiosynergisten, sterisch gehinderter Amine oder UV-Absorber eingesetzt werden.
Bevorzugt eingesetzt werden primäre Antioxidantien wie zum Beispiel Irganox 1010 (Tetrakis-(methylene-(3,5=di-(tert)-butyl-4-hydrocinnamate))methan; CAS No. 6683-19-8 (sterisch gehindertes Phenol), BASF) oder Irganox 254, allein oder in Kombination mit sekundären Antioxidantien wie zum Beispiel Irgafos TNPP oder Irgafos 168.
Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelaton auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-o-cresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gew.-%, bevorzugt in einem Bereich zwischen 0,2 und 5 Gew.-%, besonders bevorzugt in einem Bereich zwischen 0,5 und 3 Gew.-% bezogen auf den Gesamtfeststoffgehalt liegen.

Zur Verbesserung der Verarbeitungseigenschaften kann die Klebmasseformulierung weiterhin mit üblichen Prozesshilfsmitteln wie Entschäumern, Entlüftern, Netzmitteln oder Verlaufsmitteln abgemischt sein. Geeignete Konzentrationen liegen im Bereich von 0,1 bis zu 5 Gewichtsteilen bezogen auf die Feststoffe.

Füllstoffe (verstärkend oder nicht verstärkend) wie Siliciumdioxide (sphärisch, nadelförmig, plättchenförmig oder unregelmäßig wie die pyrogenen Silicas), Glas als Voll- oder Hohlkugeln, Mikroballons, Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf die Feststoffe.
Gerade Mikroballons sind bevorzugt, weil diese eine Schäumung der Klebemasse erlauben.

Gemäß einer weiteren vorteilhaften Ausführungsform ist die Schicht B ein bahnförmiges Trägersubstrat, insbesondere ein Folien- (aus PE, PP, PS oder PET), Schaum, Gewebe-, Vlies- oder Papierträger oder ein Compositeträger.
Das Klebeband kann ein oder mehrere Schichten aus Folien oder Schaumträgern enthalten.
Das Klebeband kann darüber hinaus ein oder mehrere funktionelle Schichten wie Sperrschichten, Schichten aus heißschmelzfähigem Material, oder anderen funktionellen Schichten enthalten.
Vorzugsweise hat der Träger viskoelastische Eigenschaften.
Gemäß einer weiteren vorteilhaften Ausführungsform ist die Schicht B das Verklebungsbauteil, auf das die Haftklebemasse aufgebracht wird.

Gemäß einer weiteren vorteilhaften Ausführungsform werden die Grenzflächen der Schichten A und B gleichmäßig und/oder vollflächig behandelt.
Alternativ können die Grenzflächen der Schichten A und B strukturiert behandelt werden, also dass innerhalb der Grenzfläche Zonen oder Streifen anders behandelt werden.

Weiter liegt es innerhalb des Erfindungsgedankens, wenn die Grenzflächen der Schichten A und B partiell behandelt werden.

Grundsätzlich ist es nun für den Fachmann überraschend, dass durch die Behandlung einer Klebmassenoberfläche mit einer physikalischen oder chemisch-physikalischen Methode eine Steigerung der Klebkraft erreicht werden kann. Da alle diese Methoden mit Kettenbrüchen und einem Materialabbau einhergehen, würde einer Bildung einer Schicht mit hohem Gehalt an polaren Gruppen aber geringem innerem Zusammenhalt erwartet.

Das erfindungsgemäße Klebeband vermag die bisher im Stand der Technik bekannten Nachteile
- Der Verzicht auf eine physikalische Behandlung von Grenzflächen führt im Regelfall zu einer nicht ausreichenden Verankerungsfestigkeit von laminierten Schichten.
- Einseitige Corona-/Plasmabehandlungen einer Grenzschicht vor Laminierung ermöglicht die Erhöhung der Verankerungsfestigkeit in begrenzter Höhe.
- Bei der einseitigen Behandlungen wird eine mittlere bis hoher Coronadosis verwendet, um eine ausreichende Aktivierung zu erzielen, die auch häufig mit einer Schädigung und Änderung der Grenzfläche oder der Rückseite der Schicht einher geht.
in hervorragender Art und Weise zu überwinden.

Die beidseitige Vorbehandlung der zu laminierenden Schichten kann jeweils mit niedriger Dosis erfolgen, die oben beschriebene Schädigung und Änderung auf ein Minimum reduziert.
Auch nach einer Feuchtwärmebehandlung über einen längeren Zeitraum kommt es im T-Peel- oder Klebkrafttest zum kohäsiven Spalten.
Eine längere Aktivierung der vorbehandelten Schichten erlangt wird, so dass die Laminierung zu einem späteren Zeitpunkt vorgenommen werden kann, aber ähnlich hohe Verankerungskräften erreicht werden, die einer sofortigen Laminierung entsprechen.

Erfindungsgemäß werden nach einem längeren Zeitraum zwischen physikalischer Vorbehandlung und Laminierung gleichwertige oder höhere Verankerungskräfte erzielt werden als bei einer Behandlung mit sofortiger Laminierung.

### Prüfmethoden

### Prüfmethode 1 (Klebkraft Stahl 90°)

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann.

Wenn nicht anders beschrieben, lagen die Muster auf einer 23 µm dicken und geätzten PET-Folie kaschiert vor, so dass die PET-Folie für die Zugprüfung eingespannt werden konnte. Die Verankerung der Klebmasse zur PET-Folie war stets so gut, dass nie Delamination von der PET-Folie beobachtet wurde.

Das Prüfmuster wurde auf den Stahluntergrund aufgebracht und anschließend mit einer 2 kg Rolle 5 mal mit einer Aufrollgeschwindigkeit von 10 m/min angepresst. Wenn nicht anders angegeben, erfolgte danach eine Lagerung von sieben Tagen bei 40 °C, mit anschließendem Rekonditionieren für eine Stunde im Prüfklima.

Für die Messung wurde die Stahlplatte in eine spezielle Halterung geschoben, die es ermöglicht das Muster in einem Winkel von 90° senkrecht nach oben abzuziehen. Die Klebkraftmessung erfolgte mit einer Zwick-Zugprüfmaschine. Die Messergebnisse sind in N/cm angegeben und sind gemittelt aus drei Messungen.

### Prüfmethode 2 (Klebkraft im T-Peel)

Die Bestimmung der Klebkraft im T-Peel erfolgt bei einem Prüfklima von 23 °C +/- 1 °C Temperatur und 50 % +/- 5 % rel. Luftfeuchte. Grundsätzlich wird ein zweischichtiger Verbund hergestellt, und die Klebkraft (oder Trennkraft) dieses Verbunds gemessen durch Abziehen in einer Geometrie, die von der Seite betrachtet einem liegenden "T" ähnelt.

Wenn nicht anders beschrieben, lagen die Klebmasse-Muster auf einer 23 µm dicken geätzten PET-Folie kaschiert vor, so dass die PET-Folie für die Zugprüfung eingespannt werden konnte. Die Verankerung der Klebmasse zur PET-Folie war stets so gut, dass nie Delamination von der PET-Folie beobachtet wurde. Wenn ein Substrat nicht klebend war wurde es direkt eingespannt.

Die zwei Substrate wurden von Hand zu zweischichtigen Mustern zusammenkaschiert, auf 20mm Breite zugeschnitten und anschließend mit einer 2 kg Rolle 5 mal mit einer Aufrollgeschwindigkeit von 10 m/min angepresst. Danach erfolgte eine Lagerung von sieben Tagen bei 40°C, mit anschließendem Rekonditionieren für eine Stunde im Prüfklima.

Für die Messung wurden beide Substrate in jeweils eine Klemmbacke einer Zwick-Zugprüfmaschine eingespannt, und das vom Substrat gebildete "T" von Hand unterstützt. Die Messergebnisse sind in N/cm angegeben und sind gemittelt aus drei Messungen.

### Glasübergangstemperatur

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist.

### Molekulargewichte

Die Bestimmung des mittleren Molekulargewichtes M_{W} und der Polydisperistät D erfolgte mittels Gelpermeationschromatographie (GPC). Als Eluent wurde THF mit 0,1 Vol.-% Trifluoressigsäure eingesetzt. Die Messung erfolgte bei 25 °C. Als Vorsäule wurde PSS-SDV, 5 µm, 103 Å (10-7 m), ID 8,0 mm x 50 mm verwendet. Zur Auftrennung wurden die Säulen PSS-SDV, 5 µm, 103 Å (10-7 m), 105 Å (10-5 m) und 106 Å (10-4 m) mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.

### Feststoffgehalt:

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

### K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Im Folgenden soll die Erfindung anhand mehrerer Beispiele näher erläutert werden, ohne damit eine wie auch immer geartete Einschränkung hervorrufen zu wollen.

### Beispiele

In allen Beispielen mit N2-Coronabehandlung betrug der O2-Gehalt in der Behandlungsatmosphäre <10 ppm.

### Beispiel 1 - Verbesserte Langzeitaktivierung:

Offline-Lagerfähigkeit (Definition: Zeitraum zwischen Behandlung und Laminierung der beiden Schichten)

In einem Versuch wurden ein viskoelastischer Träger und eine Haftklebemasse, eine harzmodifizierte Acrylatklebmasse, mit folgenden Parametern behandelt.

### Herstellung des beispielhaften viskoelastischen Polymers VP (Träger)

Ein für radikalische Polymerisationen konventioneller Reaktor wurde mit 54,4 kg 2-Ethylhexylacrylat, 20,0 kg Methylacrylat, 5,6 kg Acrylsäure und 53,3 kg Aceton/ Isopropanol (94:6) befüllt. Nach 45minütiger Durchleitung von Stickstoffgas unter Rühren wurde der Reaktor auf 58 °C hochgeheizt und 40 g AIBN hinzugegeben. Anschließend wurde das äußere Heizbad auf 75 °C erwärmt und die Reaktion konstant bei dieser Außentemperatur durchgeführt. Nach 1 h wurden erneut 40 g AIBN zugegeben und nach 4 h wurde mit 10 kg Aceton/Isopropanol-Gemisch (94:6) verdünnt. Nach 22 h Reaktionszeit wurde die Polymerisation abgebrochen und auf Raumtemperatur abgekühlt.
Dieses Polymer wurde dann in einem Hotmelt-Prozess mit üblichen Methoden weiterverarbeitet. Zusammengefasst wurde zuerst das Lösemittel bei Unterdruck in einem Aufkonzentrationsextruder entfernt (Restlösemittelgehalt ≤ 0,3 Gew.-%) und erhitzt. In einem Doppelschneckenextruder wurde ein Vernetzer- und Beschleunigersystem zugegeben, bestehend aus Pentaerythrittetraglycidether (Polypox® R16) und Triethylentetramin (Epikure® 925). Nach Compoundierung wurde das Hotmelt auf einem Prozessliner mittels 2-Walzenkalander beschichtet.

### Herstellung des beispielhaften Polyacrylathaftklebers PA

Ein für radikalische Polymerisationen konventioneller 100 L-Glasreaktor wurde mit 4,8 kg Acrylsäure, 11,6 kg Butylacrylat, 23,6 kg 2-Ethylhexylacrylat und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Die Reaktion wurde nach 24 h Reaktionszeit abgebrochen und auf Raumtemperatur abgekühlt. Anschließend wurde das Polyacrylat mit Uvacure® 1500 abgemischt, auf einen Feststoffgehalt von 30 % mit Aceton verdünnt und dann aus Lösung auf eine silikonisierte Trennfolie (50 µm Polyester) beziehungsweise auf eine 23 µm dicke geätzte PET-Folie beschichtet.

| Muster | Schicht A: nach Methode VP hergestellt | | Schicht B: nach Methode PA hergestellt | | Langzeitaktivierung [Lagerfähigkeit] |
|---|---|---|---|---|---|
| | Dosis [Wmin/m²] | Prozessgas | Dosis [Wmin/m²] | Prozessgas | |
| 1* | unbehandelt | | unbehandelt | | schlecht |
| 2* | 33 | Stickstoff | unbehandelt | | schlecht |
| 3* | 33 | Luft | 33 | Luft | schlecht |
| 4* | 100 | Luft | 100 | Luft | schlecht |
| 5 | 33 | Stickstoff | 33 | Luft | gut |
| 6 | 33 | Stickstoff | 100 | Luft | gut |
| 7 | 100 | Stickstoff | 33 | Luft | sehr gut |
| 8 | 100 | Stickstoff | 100 | Luft | sehr gut |

| | | | | | |
|---|---|---|---|---|---|
| *: Muster 1 bis 4 sind nicht erfindungsgemäß | | | | | |

Als Messgröße für die Verbundfestigkeit zwischen den beiden Schichten wurde die Verankerungskraft ausgewählt und wurde in Anlehnung an die T-Peel-Testmethode gemessen.

Die Laminierung der Schicht A und B wurde sofort und nach einer Lagerung nach 3 Tagen, nach 15 Tagen und 30 Tagen vorgenommen. Als Messgröße für die Verbundfestigkeit zwischen den beiden Schichten, welches nachfolgend Laminat genannt wird, wurde die Verankerungskraft ausgewählt und wurde in Anlehnung an die T-Peel-Testmethode gemessen (siehe Prüfmethode).

Es ist bekannt, dass die Aktivierung mit Luft einer Abklingkurve unterliegt, die einen hohen Abfall in den ersten Tagen zeigt.

Beansprucht wird somit auch, dass die eingebrachten Luftfunktionalitäten in der Schicht B über den Lagerungszeitraum nicht abgebaut sind und mit den eingebrachten Stickstofffunktionalitäten in der Schicht A eine chemisch-physikalische Wechselwirkung zum Aufbau einer hohen Verankerungskraft unterliegen.

Folgende Grafiken und Tabellen geben einen Überblick über ausgewählte Ergebnisse. Die Bezeichnung unterhalb der Balkengruppen spiegelt die Dosis sowie das Prozessgas wieder.
Für das Diagramm und die Tabelle ist die Schreibweise für die Behandlung wie folgt zu lesen:

| Laminat aus behandelter Schicht A und behandelter Schicht B | Behandlung Schicht A | | Behandlung Schicht B | |
|---|---|---|---|---|
| | Dosis [Wmin/m²] | Prozessgas | Dosis [Wmin/m²] | Prozessgas |
| -/-* | unbehandelt | - | unbehandelt | - |
| 33N₂/-* | 33 | Stickstoff | unbehandelt | - |
| 33L/33L* | 33 | Luft | 33 | Luft |
| 100L/100L* | 100 | Luft | 100 | Luft |
| 33N₂/33L | 33 | Stickstoff | 33 | Luft |
| 33N₂/100L | 33 | Stickstoff | 100 | Luft |
| 100N₂/33L | 100 | Stickstoff | 33 | Luft |
| 100N₂/100L | 100 | Stickstoff | 100 | Luft |

| | | | | |
|---|---|---|---|---|
| *: Muster 1 bis 4 sind nicht erfindungsgemäß | | | | |

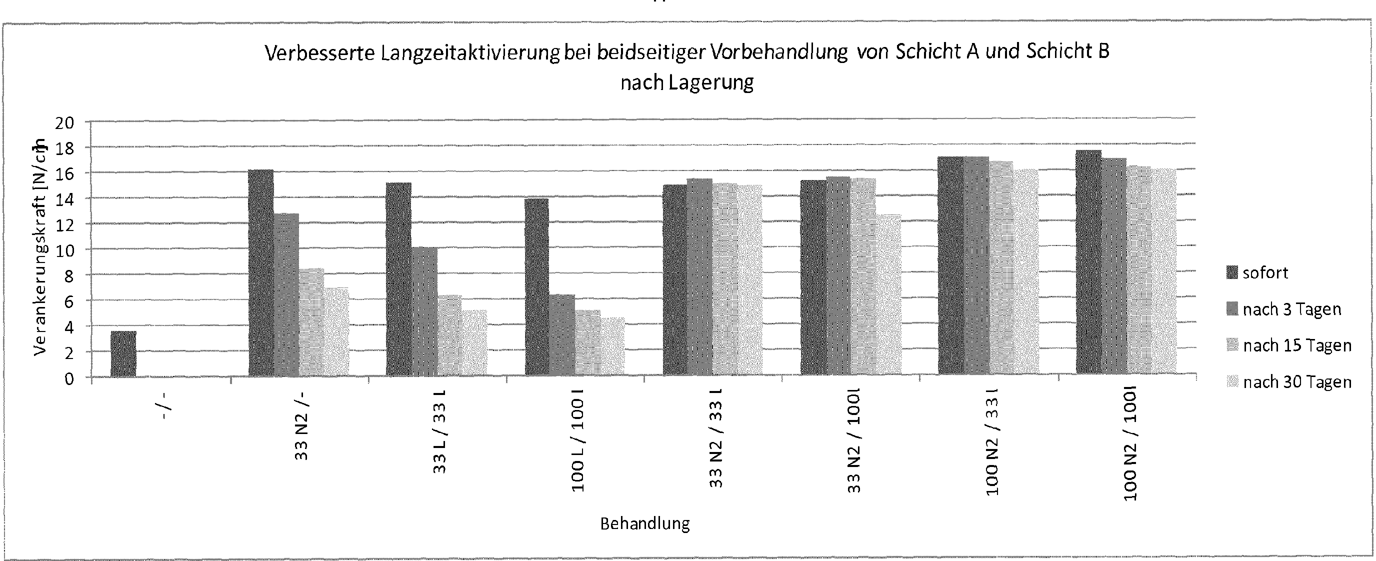

| | | Laminat aus behandelter Schicht A und behandelter Schicht B | Messwert 1 | Messwert 2 | Messwert 3 | Mittelwert Verankerung skraft [N/cm] |
|---|---|---|---|---|---|---|
| Kaschierung: | sofort | -/ - | 3,6 | 3,7 | 3,7 | 3,7 |
| Lagerung: | 7 Tage 40°C | 33 L / 33 L | 15,2 | 15,3 | 15,1 | 15,2 |
| | | 33 L / 100 L | 15,5 | 15,6 | 15,4 | 15,5 |
| | | 33 N2 / - | 16,3 | 16,3 | 16,0 | 16,2 |
| | | 33 N2/33 L | 14,8 | 14,9 | 15,1 | 14,9 |
| | | 33 N2 / 33 N2 | 15,2 | 15,3 | 15,3 | 15,2 |
| | | 33 N2 / 100L | 15,2 | 15,3 | 15,3 | 15,2 |
| | | 100 L / 33 L | 17,4 | 17,4 | 17,5 | 17,4 |
| | | 100 L / 100 L | 14,0 | 14,0 | 13,6 | 13,9 |
| | | 100 N2 / - | 17,7 | 17,7 | 17,4 | 17,6 |
| | | 100 N2 / 33 L | 17,1 | 17,0 | 17,2 | 17,1 |
| | | 100 N2 / 100L | 17,7 | 17,6 | 17,1 | 17,5 |
| | | | | | | |

| | | | 1 | 2 | 3 | Mittelwert |
|---|---|---|---|---|---|---|
| Kaschierung: | nach 3 Tagen | -/- | | | | |
| Lagerung: | 7 Tage 40°C | 33 L / 33 L | 9,9 | 9,8 | 10,5 | 10,1 |
| | | 33 L / 100 L | 7,4 | 7,3 | 7,4 | 7,4 |
| | | 33 N2 / - | 13,2 | 12,9 | 12,5 | 12,8 |
| | | 33 N2 / 33 L | 15,4 | 15,4 | 15,2 | 15,4 |
| | | 33 N2 / 33 N2 | | | | |
| | | 33 N2 / 100L | 15,5 | 15,5 | 15,4 | 15,5 |
| | | 100 L / 33 L | 7,4 | 7,4 | 7,4 | 7,4 |
| | | 100 L / 100 L | 6,3 | 6,3 | 6,3 | 6,3 |
| | | 100 N2 / - | 17,8 | 17,7 | 17,6 | 17,7 |
| | | 100 N2 / 33 L | 16,7 | 17,3 | 17,0 | 17,0 |
| | | 100 N2 / 100L | 17,1 | 17,0 | 16,6 | 16,9 |
| | | | | | | |

| | | | 1 | 2 | 3 | Mittelwert |
|---|---|---|---|---|---|---|
| Kaschierung: | nach 15 Tagen | - / - | | | | |
| Lagerung: | 7 Tage 40°C | 33 L / 33 L | 6,3 | 6,4 | 6,4 | 6,4 |
| | | 33 L / 100 L | 5,0 | 5,1 | 5,0 | 5,0 |
| | | 33 N2 / - | 8,6 | 8,5 | 8,4 | 8,5 |
| | | 33 N2 / 33 L | 15,1 | 15,0 | 15,2 | 15,1 |
| | | 33 N2 / 33 N2 | | | | |
| | | 33 N2 / 100L | 15,6 | 15,2 | 15,5 | 15,4 |
| | | 100 L / 33 L | 5,6 | 5,6 | 5,5 | 5,6 |
| | | 100 L / 100 L | 5,2 | 5,1 | 5,1 | 5,1 |
| | | 100 N2 / - | 15,5 | 14,5 | 15,2 | 15,1 |
| | | 100 N2 / 33 L | 16,8 | 16,7 | 16,7 | 16,7 |
| | | 100 N2 / 100L | 16,3 | 16,4 | 16,3 | 16,3 |
| | | | | | | |

| | | | 1 | 2 | 3 | Mittelwert |
|---|---|---|---|---|---|---|
| Kaschierung: | nach 30 Tagen | - / - | | | | |
| Lagerung: | 7 Tage 40°C | 33 L / 33 L | 5,3 | 5,1 | 5,2 | 5,2 |
| | | 33 L / 100 L | 4,4 | 4,4 | 4,4 | 4,4 |
| | | 33 N2 / - | 7,0 | 7,1 | 7,0 | 7,0 |
| | | 33 N2 / 33 L | 15,0 | 14,9 | 14,9 | 14,9 |
| | | 33 N2 / 33 N2 | | | | |
| | | 33 N2 / 100L | 12,8 | 12,5 | 12,4 | 12,6 |
| | | 100 L / 33 L | 4,8 | 4,9 | 4,8 | 4,8 |
| | | 100 L / 100 L | 4,5 | 4,5 | 4,5 | 4,5 |
| | | 100 N2 / - | 11,4 | 11,1 | 11,4 | 11,3 |
| | | 100 N2 / 33 L | 16,2 | 16,1 | 16,1 | 16,1 |
| | | 100 N2 / 100L | 16,2 | 16,3 | 15,9 | 16,2 |

- Vergleichsbeispiel 1 (Muster 3 und 4):
   Es zeigte sich, dass die gleichartige Behandlung von Grenzflächen einen signifikanten Abfall der Verankerungskräfte schon nach 3 Tagen Offline-Lagerung aufweist.
- Vergleichsbeispiel 2 (Muster 5 und 8):
   Überraschenderweise konnte aber besonders festgestellt werden, dass bei gleicher Dosis aber verschiedenartiger Behandlungsatmosphäre eine nahezu gleichbleibende Verankerungskraft auch nach 30 Tagen zeigt.
- Vergleichsbeispiel 3 (Muster 5 mit 8):
   Behandlungen mit beidseitig gleicher aber dreifach-geringerer Dosis als in Beispiel 2 und unterschiedlichem Prozessgas zeigt einen stabilen Effekt über den gesamten Lagerungszeitraum und signifikant hohen Verankerungskraftwerten, wobei der Fachmann eigentlich deutlich geringere Werte erwartet hätte.

Bei geschickt gewählter Kombination ist ein großes Prozessfenster gegeben, wie dies anhand der Ergebnisse der Muster 5, 6, 7 und 8 erkannt werden kann.

### Beispiel 2 (nicht erfindungsgemäß) - Erhöhte Klebkräfte

Überraschenderweise für den Fachmann konnte zudem festgestellt werden, dass die Verankerungskraft zwischen zwei unterschiedlich behandelten Trägern (Schicht VP und Schicht PA) eine insgesamt höhere Verankerungskraft ausweisen als die einseitige und beidseitig gleichartig behandelten Träger.
In diesem Beispiel wurden die Schichten mit einem indirekten Plasmaverfahren PlasmaLine der Firma VITO, Belgien (PlasmaLine ®) in Stickstoff als Prozessgas behandelt. Über eine Schlitzdüse wird ein lineares atmosphärisches Plasma über das Prozessgas auf den zu behandelnden Träger ausgeblasen.

Prüfmethode analog Beispiel 1, jedoch die Schichten A und B sofort laminiert.

### Beispiel 2a (nicht erfindungsgemäß): Nachweis einer höheren Verankerungskraft bei geeignet eingestellter beidseitiger Behandlung gegenüber einseitiger Behandlung

In diesem Versuch wurde dem Hauptprozessgas Stickstoff Anteile von Kohlenstoffdioxid zugegeben. Beispielhaft soll hier aufgeführt werden, wie in folgender Tabelle und Diagramm die Behandlungsparameter zu lesen sind:

| Behandlung | Schicht A | | Schicht B | |
|---|---|---|---|---|
| | Elektrische Leistung [W] | Anteil CO₂ auf Prozessgas N₂ [%] | Elektrische Leistung [W] | Anteil CO₂ auf Prozessgas N₂ [%] |
| 2500W 0% / 2500 W 2% | 2500 | 0 | 2500 | 2 |
| 1000W 0% / -- | 1000 | 0 | 0 | 0 |

Die angegebene elektrische Leistung bezieht auf die Behandlungsbreite der Entladungseinheit von 400 mm.

**Versuchsparameter 1:**

| Muster | Mittelwerte [N/cm] | Behandlungsparameter [ Elektrische Leistung/CO₂-Gehalt] | |
|---|---|---|---|
| | | Schicht A | Schicht B |
| 1 | 15,0 | 2500W / 0% | 2500W / 1% |
| 2 | 15,1 | 2500W / 0% | 2500W / 2% |
| 3 | 14,4 | 2500W / 1% | 2500W / 0% |
| 4 | 14,6 | 2500W / 0% | 1000W / 0% |
| 5 | 14,7 | 2500W / 0% | 1000W / 1% |
| 6 | 15,3 | 2500W / 0% | 1000W / 2% |
| 7 | 3,5 | 1000W / 0% | -- |
| 8 | 6,2 | 1000W / 1% | -- |
| 9 | 7,6 | 2500W / 0% | -- |
| 10 | 10,5 | 2500W / 1% | -- |

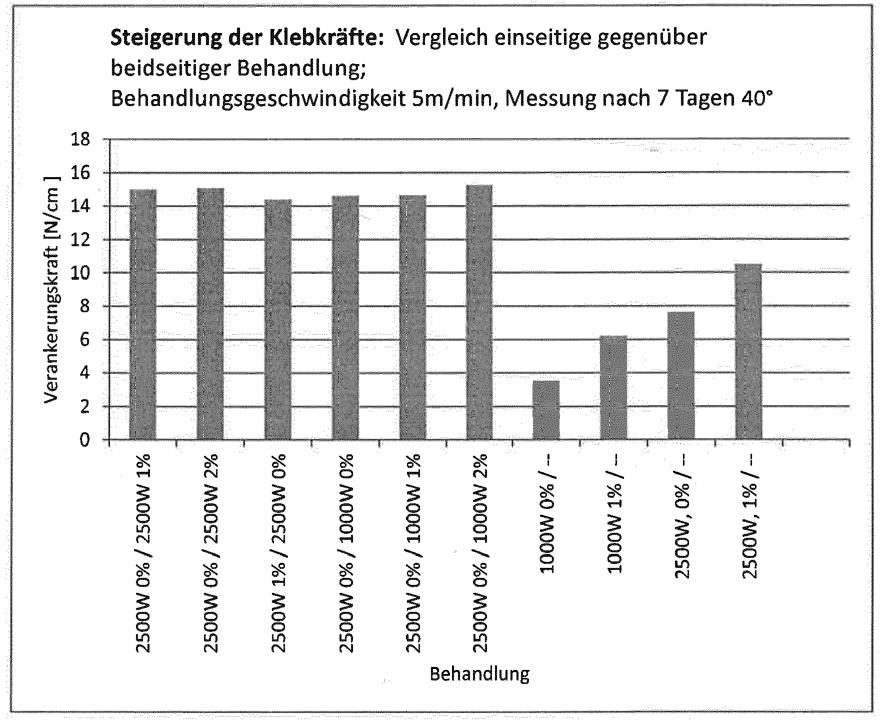

Die Abbildung zeigt signifikant höhere Verankerungskräfte (linke Achse, in N/cm) bei beidseitig verschiedenartiger Behandlung gegenüber einseitiger Behandlung

Die Ergebnisse einer beidseitig verschiedenartiger Behandlung gegenüber einer einseitigen Behandlung zeigen einen Anstieg der Verankerungskraft über 200 %.

### Beispiel 2b (nicht erfindungsgemäß): Nachweis einer höheren Verankerungskraft bei geeignet eingestellter beidseitig und verschiedenartiger Behandlung gegenüber beidseitig gleichartiger Behandlung

**Versuchsparameter 2:**

| Muster | Mittelwerte [N/cm] | Behandlungsparameter [Elektrische Leistung/CO2-Gehalt] | |
|---|---|---|---|
| | | Schicht A | Schicht B |
| 1 | 14,4 | 2500W / 0% | 2500W / 0% |
| 2 | 15,3 | 2500W / 0% | 1000W / 2% |
| 3 | 10,5 | 2500W / 1% | -- |

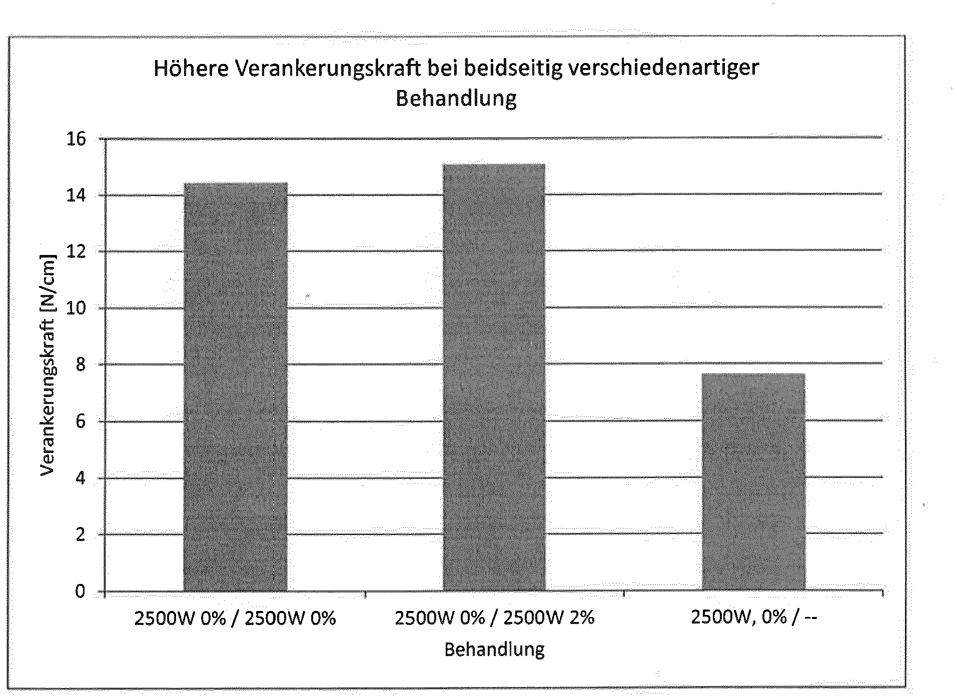

Die Abbildung zeigt die höheren Verankerungskräfte bei beidseitig verschiedenartiger Behandlung gegenüber beidseitig gleichartiger Behandlung

### Beispiel 3 (nicht erfindungsgemäß): Gleiche oder höhere Verankerungskraft bei beidseitig unterschiedlicher Behandlung mit höhere Dosis (oder elektrischer Leistung) gegenüber beidseitig unterschiedlicher Behandlung mit gering eingestellter Dosis (oder elektrischer Leistung)

| Muster | Mittelwerte [N/cm] | Behandlungsparameter [Elektrische Leistung/CO₂-Gehalt] | |
|---|---|---|---|
| | | Schicht A | Schicht B |
| 2 | 15,1 | 2500W / 0% | 2500W / 2% |
| 6 | 15,3 | 2500W / 0% | 1000W / 2% |

Aus der obigen Tabelle geht hervor, dass die Verankerungskraft bei Behandlungen der Schichten mit einer gering eingesetzten elektrischen Leistung oder Dosis das gleiche oder höhere Niveau erreicht, wie eine Behandlungskombination mit hohen Einstellungen.

Dies ermöglicht innerhalb des Behandlungsprozesses Energie einzusparen, aber bei gleichwertiger Verankerungskraft.

### Beispiel 4: Höhere Verankerungskraft durch Kombination von Luft- und N2-Corona auf gegenüberliegenden Grenzflächen

Insbesondere kann bei einer bei einer Kaschierung zweier Schichten unter Verwendung einer Coronabehandlung beider Oberflächen auch eine erhöhte Verbundfestigkeit erreicht werden, wenn auf einer Oberfläche eine Corona mit Luft als Prozessgas eingesetzt wird und auf der anderen Oberfläche einer Corona mit N2 als Prozessgas.

Die Behandlung in den Beispielen 4a und 4b erfolgte bahnförmig mit Elektrodenkonfiguration einer DBD (Firma Vetaphone). Die verschiedenartige Behandlung der Schichten A und B erhöht die erreichte Maximalkraft.

### Beispiel 4a: Erhöhung der Verankerungskraft zwischen VP und AP

Eine besondere Erhöhung der Verankerungskraft zwischen den Schichten VP und AP konnte mittels dem gelehrten Verfahren erzeugt werden. Die Messung erfolgte mit der Methode T-Peel-Test nach drei Tagen Lagerung bei 23 °C. Die Maximalkraft bei dem T-Peel-Test konnte um über 180 % gesteigert werden, wenn die Behandlungsatmosphäre bei der Behandlung der jeweiligen Schichten verschiedenartig war.

| **Behandlungsparameter** | | | | **Trennkraft [N/cm]** |
|---|---|---|---|---|
| VP | | **PA** | | **3d RT** |
| Dosis | Prozessgas | Dosis | Prozessgas | |
| 33* | N2 | - | - | 10,7 |
| 33* | N2 | 33 | N2 | 8,1 |
| 33 | N2 | 33 | Luft | 14,8 |

| | | | | |
|---|---|---|---|---|
| *: Muster 1 und 2 nicht erfindungsgemäß | | | | |

### Beispiel 4b: Erhöhung der Verankerungskraft zwischen einem PE-Schaum und AP

In diesem Beispiel ist zu sehen, dass die gezielte Kombination von Luft-Corona und N2-Corona auf die aufeinander zu laminierenden Grenzflächen bei der Kaschierung auf einen PE-basierten Schaum (von Sekisui Alveo, 400µm, geschlossenzellig) einen Vorteil bringen kann. Insbesondere nach einer Schnellalterung bei 40 °C tritt der Vorteil deutlich hervor.

| **Behandlungsparameter** | | | | **Verankerungskraft in [N/cm], nach Lagerart** | |
|---|---|---|---|---|---|
| **Träger-Schaum** | | **Klebmasse PA** | | **7d RT** | **7d 40°** |
| Dosis | Prozessgas | Dosis | Prozessgas | | |
| 100* | Luft | - | - | 2,5 | 2,9 |
| 100* | Luft | 50 | Luft | 4,7 | 5,7 |
| 100 | Luft | 50 | N2 | 4,8 | 7,0 |

| | | | | | |
|---|---|---|---|---|---|
| *: Muster 1 und 2 nicht erfindungsgemäß | | | | | |

Die hier beispielhaft demonstrierten Ergebnisse können verstanden werden auf der Basis der ausführlich beschriebenen Säure-Base-Wechselwirkungen.

### Materialverbundbeispiele

Im Folgendem soll die Erfindung anhand mehrerer Beispiel für Materialverbunde näher beschrieben werden, ohne damit die Erfindung unnötig einschränken zu wollen.

| Schicht A | Schicht B |
|---|---|
| Offenzellige und geschlossenzellige Schaumträger, insbesondere aus Poylyethylen und Polypropylen | Acrylatklebmasse |
| Hitzeaktivierbarer Klebharzschicht | viskoelastischer Träger |
| Niedrigschmelzender Polyolefinträger | Hitzeaktivierbare Klebharzschicht |
| viskoelastischen Träger | viskoelastischer Träger |
| viskoelastischer Träger | Haftklebemasse |
| viskoelastischer Träger | Haftklebmasse mit einem viskoelastischen Träger |
| Gewebeträger | Synthesekautschukklebemasse¹ |
| Vliesträger | Hotmeltacrlyatklebmasse¹ |
| Poylpropylenfolienträger | Dispersionsacrylatklebmasse¹ |
| Satinierter oder gekreppter Papierträger | Dispersionsacrylatklebmasse¹ |
| Spritzgussteile aus PE und PP, insbesondere aus PA | Reinacrylatklebmasse¹ |
| Stahl | Acrylathaftklebmasse |
| ¹ Haftklebemassen verbunden mit einem weiteren Trägermaterial oder auf einem Releaseliner | |

Des Weiteren können Materialien zum Einsatz kommen, die selbst schon nach einem Verfahren eine physikalische Oberflächenmodifikation erhalten haben.

## Patentansprüche

1. Klebeband, bevorzugt Selbstklebeband, bestehend aus mindestens zwei direkt aufeinander laminierten Schichten A und B, wobei mindestens eine oder beide Schichten A oder B eine Klebmasse ist und die aufeinander laminierten Grenzflächen der Schichten A und B einer physikalischen Behandlung in Form einer CoronaEntladung unterzogen werden, bevor die Schichten aufeinanderlaminiert werden, wobei die erste physikalische Behandlung eine Coronabehandlung in Luft ist und die zweite physikalische Behandlung eine Coronabehandlung in N2 ist.

2. Klebeband nach Anspruch 1,
**dadurch gekennzeichnet, dass**
die aufeinander laminierten Grenzflächen eine durch die verschiedenartigen physikalischen Behandlungen der Grenzflächen erzeugte oder verstärkte Säure-Base- oder Donor-Akzeptor-Wechselwirkung besitzen, insbesondere durch Verwendung von komplementären Prozessgasen, insbesondere durch Verwendung eines oxidierenden und eines reduzierenden Gases, insbesondere durch Verwendung eines sauer-modifizierenden Gases und eines basisch-modifizierenden Gases.

3. Klebeband nach Anspruch 1 oder 2,
**dadurch gekennzeichnet, dass**
bei der zweiten physikalischen Behandlung in N2 der O2-Gehalt in der N2-Atmosphäre <1000 ppm beträgt, bevorzugt <100 ppm, insbesondere bevorzugt <20 ppm, ganz besonders bevorzugt <10 ppm.

4. Klebeband nach zumindest einem der vorherigen Ansprüche,
**dadurch gekennzeichnet, dass**
mindestens eine der Schichten A oder B viskoelastisch ist.

5. Klebeband nach zumindest einem der vorherigen Ansprüche,
**dadurch gekennzeichnet, dass**
die Klebemasse eine Haftklebemasse ist.

6. Klebeband nach zumindest einem der vorherigen Ansprüche,
**dadurch gekennzeichnet, dass**
die Schicht B ein bahnförmiges Trägersubstrat ist, insbesondere ein Folien-, Schaum, Gewebe-, Vlies- oder Papierträger.

7. Klebeband nach zumindest einem der vorherigen Ansprüche,
**dadurch gekennzeichnet, dass**
die Schicht B ein Verklebungsbauteil ist

8. Klebeband nach zumindest einem der vorherigen Ansprüche,
**dadurch gekennzeichnet, dass**
sich die physikalischen Methoden in Bezug auf die eingestellten Verfahrensparameter, insbesondere der Dosis, die für beide Grenzflächen geeignet ist, unterscheiden.

9. Klebeband nach zumindest einem der vorherigen Ansprüche,
**dadurch gekennzeichnet, dass**
die Behandlungsdauer der Grenzflächen der Schichten A und B unterschiedlich ist.

## Claims

1. Adhesive tape, preferably self-adhesive tape, consisting of at least two layers A and B laminated directly to one another, at least one or both layers A or B being an adhesive, and the interfaces of the layers A and B that are laminated to one another being subjected to a physical treatment in the form of a corona discharge, before the layers are laminated to one another, the first physical treatment being a corona treatment in air and the second physical treatment being a corona treatment in N2.

2. Adhesive tape according to Claim 1,
**characterized in that**
the interfaces laminated to one another possess an acid-base interaction or donor-acceptor interaction that is intensified or generated by the different types of physical treatments of the interfaces, more particularly through use of complementary process gases, more particularly through use of an oxidizing gas and a reducing gas, more particularly through use of an acidically modifying gas and of a basically modifying gas.

3. Adhesive tape according to Claim 1 or 2,
**characterized in that**
in the second physical treatment in N2 the O2 content of the N2 atmosphere is < 1000 ppm, preferably < 100 ppm, especially preferably < 20 ppm, very preferably < 10 ppm.

4. Adhesive tape according to at least one of the preceding claims,
**characterized in that**
at least one of the layers A or B is viscoelastic.

5. Adhesive tape according to at least one of the preceding claims,
**characterized in that**
the adhesive is a pressure-sensitive adhesive.

6. Adhesive tape according to at least one of the preceding claims,
**characterized in that**
the layer B is a carrier substrate in web form, more particularly a film, foam, fabric, nonwoven, or paper carrier.

7. Adhesive tape according to at least one of the preceding claims,
**characterized in that**
the layer B is an adhesive bonding component.

8. Adhesive tape according to at least one of the preceding claims,
**characterized in that**
the physical methods differ in respect of the process parameters set, more particularly the dose which is suitable for both interfaces.

9. Adhesive tape according to at least one of the preceding claims,
**characterized in that**
the treatment time for the interfaces of the layers A and B is different.

## Revendications

1. Ruban adhésif, de préférence ruban autoadhésif, constitué par au moins deux couches A et B stratifiées directement l'une sur l'autre, au moins l'une couche ou les deux couches A ou B étant une masse adhésive et les surfaces limites stratifiées l'une sur l'autre des couches A et B étant soumises à un traitement physique sous forme d'une décharge Corona avant la stratification des couches l'une sur l'autre, le premier traitement physique étant un traitement corona dans l'air et le deuxième traitement physique étant un traitement Corona sous N₂.

2. Ruban adhésif selon la revendication 1, **caractérisé en ce que** les surfaces limites stratifiées l'une sur l'autre présentent une interaction acide-base ou donneur-accepteur générée ou renforcée par des traitements physiques différents des surfaces limites, en particulier par l'utilisation de gaz de procédé complémentaires, en particulier par l'utilisation d'un gaz oxydant et d'un gaz réducteur, en particulier par l'utilisation d'un gaz modifié de manière acide et d'un gaz modifié de manière basique.

3. Ruban adhésif selon la revendication 1 ou 2, **caractérisé en ce que** lors du deuxième traitement physique sous N₂, la teneur en O₂ dans l'atmosphère de N₂ est < 1000 ppm, de préférence < 100 ppm, en particulier de préférence < 20 ppm, de manière tout particulièrement préférée < 10 ppm.

4. Ruban adhésif selon au moins l'une quelconque des revendications précédentes, **caractérisé en ce qu'**au moins une des couches A ou B est viscoélastique.

5. Ruban adhésif selon au moins l'une quelconque des revendications précédentes, **caractérisé en ce que** la masse adhésive est une masse autoadhésive.

6. Ruban adhésif selon au moins l'une quelconque des revendications précédentes, **caractérisé en ce que** la couche B est un substrat support sous forme de bande, en particulier un support en feuille, en mousse, en tissu, en non-tissé ou en papier.

7. Ruban adhésif selon au moins l'une quelconque des revendications précédentes, **caractérisé en ce que** la couche B est une pièce de collage.

8. Ruban adhésif selon au moins l'une quelconque des revendications précédentes, **caractérisé en ce que** les procédés physiques se distinguent en ce qui concerne les paramètres de procédé réglés, en particulier la dose qui est appropriée pour les deux surfaces limites.

9. Ruban adhésif selon au moins l'une quelconque des revendications précédentes, **caractérisé en ce que** la durée de traitement des surfaces limites des couches A et B est différente.
